# DEMANDE DE BREVET EUROPEEN

(11) **EP 3 320 817 A1**
(43) Date de publication de la demande: **16.05.2018**
(21) Numéro de dépôt: 17200253.7
(22) Date de dépôt: 07.11.2017
(51) Int. Cl.: A47J 36/16

(54) **DISPOSITIF DE TRAITEMENT D'ALIMENTS MUNI D'UN PIED D'APPUI**

(30) Priorité: 10.11.2016 FR 1660925
(71) Demandeur: SEB S.A., 69130 Ecully (FR)
(72) Inventeur: LINGLIN, Benoît, 74370 SAINT MARTIN BELLEVUE (FR)
(74) Mandataire: Bourrières, Patrice

(57) **Abrégé**

L'invention concerne un dispositif (1) de traitement d'aliments disposés dans un récipient (50a, 50b) de cuisson ledit dispositif (1) comportant des moyens de fixation (3, 4) sur ledit récipient (50a, 50b) de cuisson qui permettent un accouplement/désaccouplement dudit dispositif (1) sur le récipient de cuisson (50a, 50b) et un arbre d'entrainement (20) d'un outil (40) rotatif destiné à coopérer avec lesdits aliments.

Conformément à l'invention, ledit dispositif (1) comporte un organe de guidage et d'appui (32) d'une extrémité libre (31) de l'arbre d'entrainement (20), ledit organe de guidage et d'appui (32) comportant une face inférieure (33) d'appui destinée à reposer sur un fond (51) du récipient (50a, 50b) de cuisson, et ledit organe de guidage et d'appui (32) est lié à l'extrémité libre (31) de l'arbre d'entrainement (20) par une liaison du type rotule sphérique ou pivot.

## Description

La présente invention se rapporte au domaine technique général des dispositifs de traitement d'aliments disposés dans un récipient de cuisson, en particulier des dispositifs de traitement d'aliments destinés à coopérer avec plusieurs tailles de récipients de cuisson.

Il est connu du document FR2743710 de réaliser un dispositif de traitement d'aliments disposés dans un récipient. Il est connu du document US5617774 de réaliser un dispositif de traitement d'aliments disposés dans un récipient de cuisson dans lequel le dispositif comporte des moyens de fixation sur une poignée du récipient de cuisson qui permettent un accouplement/désaccouplement du dispositif de traitement d'aliments du récipient de cuisson sans outil. Le dispositif comporte un arbre d'entrainement d'un outil rotatif destiné à coopérer avec lesdits aliments. L'arbre d'entrainement s'étend selon un axe vertical et comporte une extrémité libre munie d'une patte perforée. Le récipient comporte un pion fixé au centre du fond. La patte perforée coopère avec le pion pour positionner et guider en rotation l'arbre d'entrainement et l'outil.

Cependant, un tel récipient muni d'un pion fixé sur le fond est difficile à nettoyer. Les ustensiles de nettoyage, par exemple les éponges, vont être dégradés suite aux passages répétés sur le pion qui comporte des parties anguleuses.

De plus, un jeu important entre la patte perforée et le pion est nécessaire pour rattraper les dispersions de positionnement du dispositif sur la poignée du récipient. Ainsi, l'arbre d'entrainement et l'outil sont mal guidés en rotation. En conséquence, l'extrémité libre de l'arbre d'entrainement et l'outil peuvent frotter sur une surface du fond et la dégrader.

Le but de la présente invention est de remédier aux inconvénients précités et de proposer un dispositif de traitement d'aliments qui présente une mise en oeuvre simple et ergonomique.

Un autre but de la présente invention est de proposer un dispositif de traitement d'aliments qui présente une conception simple et qui soit économique à mettre en oeuvre.

Ces buts sont atteints avec un dispositif de traitement d'aliments disposés dans un récipient de cuisson, le dispositif comportant des moyens de fixation sur le récipient de cuisson qui permettent un accouplement/désaccouplement du dispositif sur le récipient de cuisson et un arbre d'entrainement d'un outil rotatif destiné à coopérer avec les aliments, caractérisé en ce que le dispositif comporte un organe de guidage et d'appui d'une extrémité libre de l'arbre d'entrainement, ledit organe de guidage et d'appui comportant une face inférieure d'appui destinée à reposer de manière immobile sur un fond du récipient de cuisson et en ce que ledit organe de guidage et d'appui est lié à l'extrémité libre de l'arbre d'entrainement par une liaison du type rotule sphérique ou pivot.

Ainsi, l'organe de guidage et d'appui repose sur le fond de manière immobile. Le couple généré par les forces de frottement lors du fonctionnement dans la liaison entre l'organe de guidage et d'appui et l'extrémité de l'arbre d'entrainement est inférieur au couple généré par les forces de frottement entre la face inférieure de l'organe de guidage et d'appui et le fond du récipient.

De manière avantageuse, la face inférieure d'appui de l'organe de guidage et d'appui est destinée à coopérer avec un fond plat du récipient. On comprend ainsi que le centrage de l'organe de guidage et d'appui par rapport au fond est réalisé par exemple par les moyens de fixation du dispositif sur le récipient de cuisson.

L'extrémité libre de l'arbre d'entrainement et par conséquent l'outil sont guidés en rotation par une liaison avec l'organe de guidage et d'appui qui peut présenter un jeu réduit. En conséquence, l'arbre d'entrainement et par conséquent l'outil sont positionnés de manière précise par rapport au fond du récipient de cuisson pour garantir un traitement efficace de tous les aliments, notamment ceux disposés au plus près du fond.

Le pion immobile sur le fond permet de ne pas générer de frottements qui pourraient dégrader la surface du fond qui est généralement munie d'un revêtement, par exemple un revêtement à base de polytétrafluoroéthylène.

Une liaison du type rotule sphérique ou pivot autorise à minima une rotation de l'arbre d'entrainement par rapport à l'organe de guidage et d'appui autour d'un axe vertical d'extension de l'arbre d'entrainement.
De manière avantageuse, le dispositif comporte des moyens de fixation sur le récipient de cuisson qui permettent un accouplement/désaccouplement par l'utilisateur du dispositif par rapport au récipient de cuisson sans outil.

Avantageusement, l'organe de guidage et d'appui est formé par un pion cylindrique dont la face inférieure destinée à reposer sur le fond du récipient est circulaire, ledit pion étant mobile en rotation dans un logement cylindrique agencé à l'extrémité de l'arbre d'entrainement.

De manière avantageuse, l'arbre d'entrainement s'étend selon un axe vertical. Ainsi, une telle disposition permet un bon guidage radialement à l'axe vertical dans lequel s'étend l'arbre d'entrainement.

De préférence, le pion cylindrique comporte une face supérieure bombée qui coopère avec une paroi de fond du logement cylindrique.

Ainsi, la face supérieure du pion coopère avec la paroi de fond du logement cylindrique sur une surface de contact réduite. En conséquence, le couple généré par les forces de frottement lors du fonctionnement est réduit.

De manière avantageuse, la paroi de fond du logement cylindrique est bombée.

De préférence, le dispositif comporte des moyens de maintien du pion dans le logement cylindrique de l'arbre d'entrainement.

Ainsi, le dispositif peut être manipulé, notamment lors du nettoyage, sans risque de séparation et de perte du pion.

De manière avantageuse, les moyens de maintien comportent un ergot solidaire de l'arbre d'entrainement qui coopère avec une rainure périphérique du pion.

Avantageusement, l'organe de guidage et d'appui est réalisé en un matériau présentant un coefficient de frottement faible, notamment en polytétratluoroéthylène.

Par coefficient de frottement faible, on comprend un coefficient de frottement inférieur à 0,3.

De préférence, la face inférieure de l'organe de guidage et d'appui est recouverte d'un matériau présentant un coefficient de frottement supérieur au coefficient de frottement du matériau constituant l'organe de guidage et d'appui.

Ainsi, le risque que la face inférieure tourne par rapport au fond est réduit lorsque le dispositif est en fonctionnement.

De préférence, la face inférieure de l'organe de guidage et d'appui présente une surface de contact avec le fond du récipient supérieure à 75 mm².

Cette disposition permet également de réduire le risque que la face inférieure tourne par rapport au fond lorsque le dispositif est en fonctionnement.

Avantageusement, l'outil rotatif est monté coulissant le long d'un axe vertical d'extension de l'arbre d'entrainement.

Ainsi, le dispositif peut s'adapter à plusieurs récipients de hauteurs différentes.

De préférence, le dispositif comporte des moyens de fixation de l'outil rotatif sur l'arbre d'entrainement permettant un montage/démontage sans outil.

L'outil rotatif comporte généralement une extension radiale à l'axe vertical dont une extrémité libre doit être positionnée au plus près de la paroi du récipient pour bien traiter tous les aliments. L'utilisateur peut, en fonction du récipient choisi, adapter facilement la bonne position de travail de l'outil sur l'arbre d'entrainement et ainsi positionner l'extension radiale au plus près de la paroi.

Avantageusement le dispositif comporte un mécanisme de coulissement de l'arbre d'entrainement par rapport aux moyens de fixation selon une direction radiale du récipient,

Ainsi, l'arbre d'entrainement et par conséquent l'outil peuvent être positionnés au centre du récipient.

De préférence, le dispositif de traitement comporte un moteur mettant en rotation l'arbre d'entrainement et une source d'énergie.

Ainsi, l'outil est mis en rotation de manière automatique.

L'invention sera mieux comprise à l'étude des modes de réalisation pris à titre nullement limitatif et illustrés dans les figures annexées dans lesquelles :
- La figure 1 illustre une vue en perspective d'un dispositif de traitement d'aliments agencé sur un récipient de cuisson de petit diamètre selon un mode particulier de réalisation de l'invention.
- La figure 2 illustre une vue en perspective du dispositif de traitement d'aliments illustré sur la figure 1, agencé sur un récipient de cuisson de grand diamètre.
- La figure 3 illustre une vue en perspective éclatée du dispositif de traitement d'aliments illustré sur la figure 2.
- La figure 4 illustre une vue en section selon la ligne IV-IV du dispositif de traitement d'aliments illustré sur la figure 2.
- La figure 5 illustre une vue de détail V du dispositif de préparation de boisson illustré sur la figure 4.
- La figure 6 illustre une vue en coupe selon la ligne VI-VI du dispositif de traitement d'aliments illustré sur la figure 3.
- La figure 7 illustre une vue de détail VII du dispositif de préparation de boisson illustré sur la figure 3.

On notera que, dans ce document, les termes «horizontal», «vertical», «inférieur», «supérieur», «longitudinal», «transversal», «haut», «bas», employés pour décrire le dispositif de traitement font référence à ce dispositif de traitement agencé sur un récipient en situation d'usage.

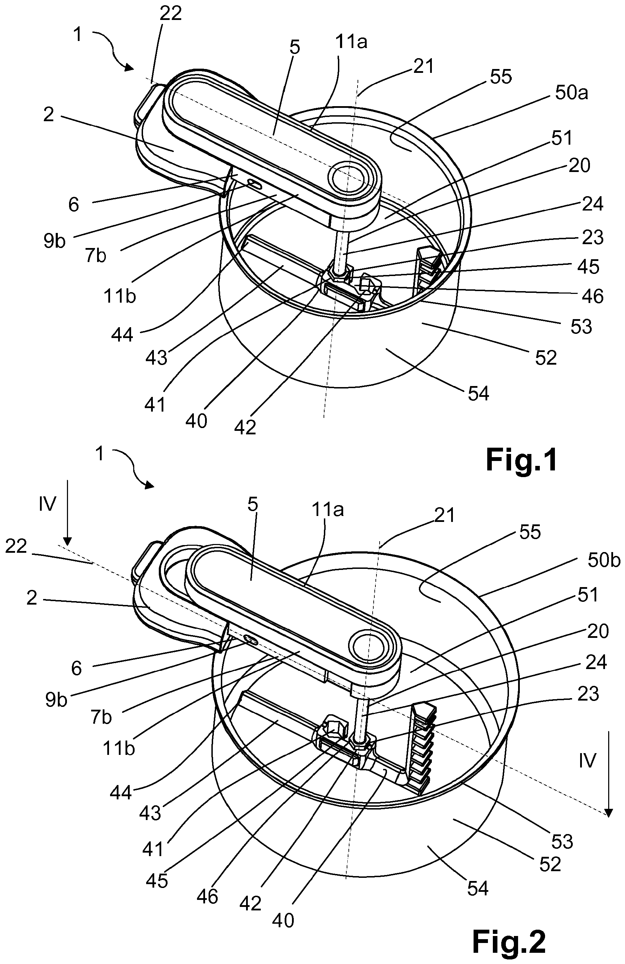

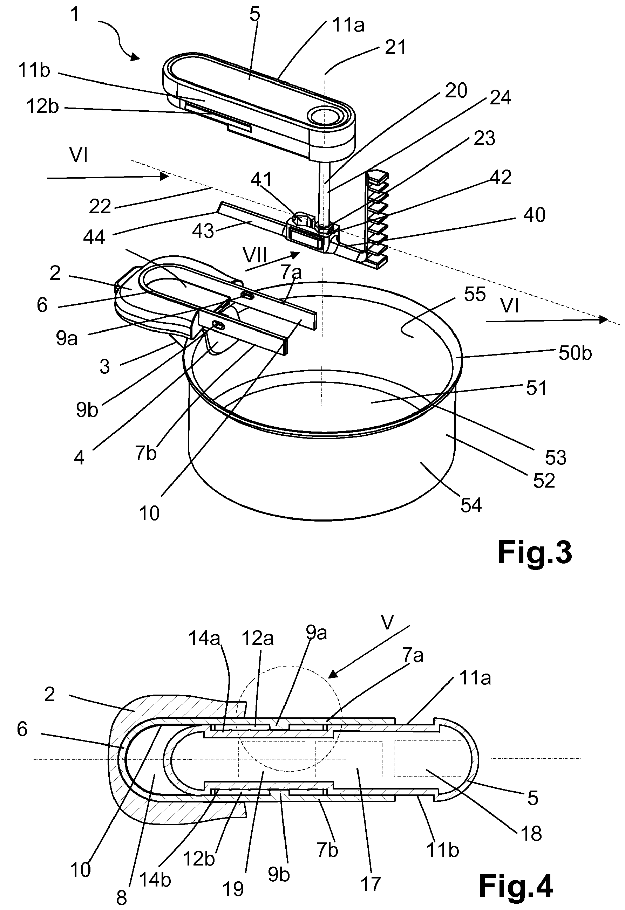

Dans l'exemple de réalisation représenté aux figures 1 à 3, un dispositif 1 de traitement des aliments est agencé sur un récipient 50a, 50b de cuisson. Le dispositif de traitement est un dispositif 1 de mélange et/ou de brassage. Le récipient de cuisson est une casserole 50a de diamètre 20 centimètres (Fig.1) ou est une casserole 50b de diamètre 22 centimètres (Fig.2 et 3). Chaque récipient 50a, 50b de cuisson comporte un fond 51 et une paroi 52 latérale qui est prolongée vers le haut par une portion recourbée 53 vers l'extérieur. Le dispositif 1 de traitement des aliments comporte un châssis 2 en forme de poignée. Le châssis 2 comporte des moyens de fixation du dispositif sur la paroi 52 et sur la portion recourbée 53. Les moyens de fixation comprennent un mors fixe 3 destiné à prendre appui sur une face externe 54 de la paroi 52 et un mors mobile 4 (Fig.3) destiné à prendre appui sur une face interne 55 de la paroi 52. Le mors mobile 4 est mobile entre une position fermée d'accouplement dans laquelle la paroi 52 est pincée et une position ouverte de désaccouplement. Les moyens de fixation comportent un mécanisme de déplacement du mors mobile 4 bien connu de l'homme du métier et décrit par exemple dans le document EP769263. Le dispositif 1 de traitement des aliments comporte un boitier 5 muni d'un arbre d'entrainement 20 d'un outil 40 rotatif. L'arbre d'entrainement 20 s'étend selon un axe vertical 21 et l'outil 40 rotatif est agencé à proximité du fond 51.

Le dispositif 1 de traitement des aliments comporte un mécanisme de coulissement du boitier 5 muni de l'arbre d'entrainement 20 par rapport au châssis 2 comprenant les moyens de fixation, selon une direction radiale 22 du récipient 50a, 50b. Le châssis 2 comporte une lame 6 repliée sur elle-même en forme de U et qui présente deux extrémités libres 7a, 7b. Le châssis 2 comprend une cavité 8 de réception de la lame 6. Les extrémités libres 7a, 7b s'étendent hors de la cavité 8 selon la direction radiale 22 au récipient 50a, 50b. Les extrémités libres 7a, 7b comportent chacune un tenon 9a, 9b agencé sur une face interne 10 de la lame 6, à l'intérieur du U. Chaque tenon 9a, 9b s'étend longitudinalement selon la direction radiale 22 au récipient 50a, 50b. Le boitier 5 s'étend longitudinalement selon la direction radiale 22 au récipient 50a, 50b. Le boitier 5 présente deux faces latérales 11 a, 11 b munies chacune d'une rainure 12a, 12b s'étendant selon la direction radiale 22 au récipient 50a, 50b. Le mécanisme de coulissement du boitier 5 par rapport au châssis comprend les tenons 9a, 9b qui sont agencés dans les rainures 12a, 12b.

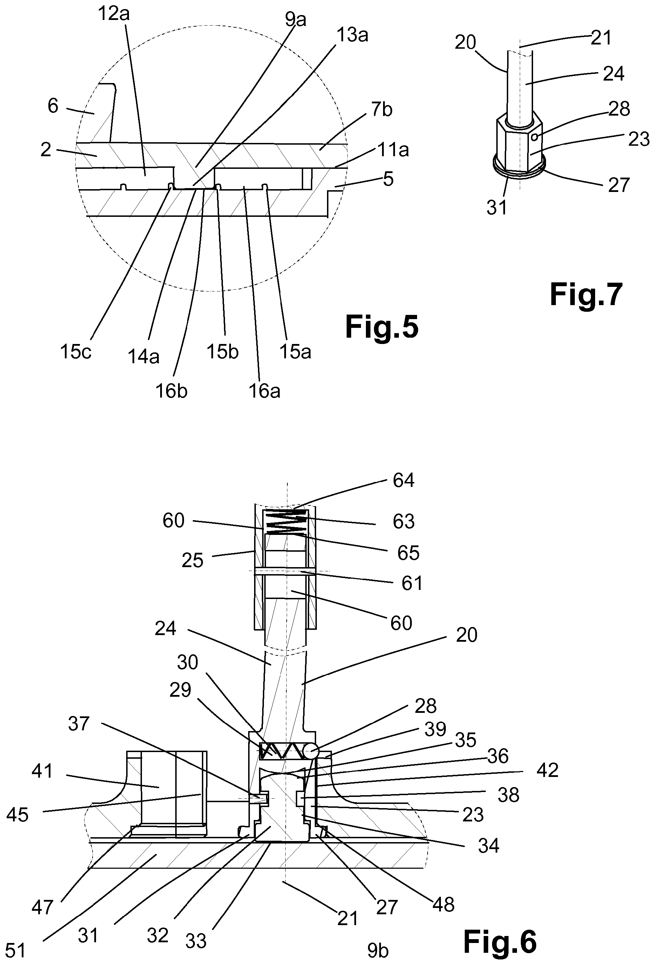

Le dispositif 1 de traitement des aliments comporte un système de blocage du mécanisme de coulissement du boitier 5 par rapport au châssis 2 dans au moins deux positions prédéterminées le long de la direction radiale 22. Chaque tenon 9a, 9b comprend une extrémité libre 13a, 13b et chaque rainure 12a, 12b comporte une paroi de fond 14a, 14b munie de protubérances 15a, 15b, 15c (Fig. 5). Deux protubérances 15a, 15b, 15c adjacentes et une portion de la paroi de fond 14a, 14b forment un logement 16a, 16b de réception de l'extrémité libre 13a, 13b. La lame 6 est réalisée en un matériau élastique. Les extrémités libres 7a, 7b qui portent les tenons 9a, 9b forment des éléments ressorts qui sont mobiles transversalement à la direction radiale 22 pour permettre aux tenons 9a, 9b de sortir de leur logement 16a, 16b respectif et passer dans un logement 16a, 16b adjacent. Ainsi, le système de blocage comporte les tenons 9a, 9b formant des organes de verrouillage mobiles entre une position de blocage dans laquelle le boitier 5 est maintenu en position par rapport au châssis 2 et une position de libération dans laquelle le boitier 5 peut coulisser par rapport aux châssis 2, chaque tenon 9a, 9b coopérant avec au moins deux logements 16a, 16b

Tel que visible à la figure 4, le boitier 5 comporte un moteur 17 et un mécanisme de transmission 18 pour mettre en rotation l'arbre d'entrainement 20 et l'outil 40 rotatif. Le boitier 5 comporte une source d'énergie 19 pour alimenter le moteur 17.

Conformément aux figures 1 et 2, l'outil 40 est mobile transversalement à l'axe vertical 21 d'extension de l'arbre d'entrainement 20 entre des première et deuxième positions de travail. L'outil 40 rotatif comporte des premier et deuxième logements 41, 42 de réception de l'arbre d'entrainement 20 qui sont agencés cote à cote. Les premier et deuxième logements 41, 42 de réception s'étendent selon l'axe vertical 21 et traversent de part en part l'outil 40. L'outil 40 est dans la première position de travail (Fig.1) lorsque l'arbre d'entrainement 20 est agencé dans le premier logement 41 et l'outil 40 est dans la deuxième position de travail (Fig.2) lorsque l'arbre d'entrainement 20 est agencé dans le deuxième logement 42. L'outil 40 comporte une extension radiale 43 munie d'une extrémité libre 44. Lorsque le dispositif 1 de traitement des aliments est agencé sur le récipient de cuisson qui est la casserole 50a de diamètre 20 centimètres, l'outil 40 est dans la première position de travail et l'extrémité libre 44 de l'extension radiale 43 est à proximité de la paroi 52 du récipient (Fig.1). Lorsque le dispositif 1 de traitement des aliments est agencé sur le récipient de cuisson qui est la casserole 50b de diamètre 22 centimètres, l'outil 40 est dans la deuxième position de travail et l'extrémité libre 44 de l'extension radiale 44 est toujours à proximité de la paroi 52 du récipient (Fig.2).

L'arbre d'entrainement 20 comporte une première portion 23 dont la section transversale à l'axe vertical 21 présente une forme hexagonale (Fig.7), les premier et deuxième logements 41, 42 présentant une section transversale de forme complémentaire à la forme hexagonale. Les premier et deuxième logements 41, 42 comportent des première et deuxième ouvertures latérales 45, 46 destinées à coopérer avec une deuxième portion 24 de l'arbre d'entrainement 20 qui présente une section transversale de forme circulaire. La section transversale de forme circulaire de la deuxième portion 24 est inférieure à une section circulaire dans laquelle s'inscrit la section transversale de la première portion 23.

Tel que visible à la figure 6, l'outil 40 est immobilisé sur l'arbre d'entrainement 20 par des moyens de maintien permettant un montage/démontage de l'outil 40 par rapport à l'arbre d'entrainement 20 sans outillage. La première portion 23 de l'arbre d'entrainement 20 présente une extrémité libre 31 qui comporte un épaulement 27 qui coopère avec une face inférieure 47, 48 du premier ou du deuxième logement 45, 46. Les moyens de maintien comportent un élément de verrouillage formé par une bille 28. La bille 28 est agencée dans un trou borgne 29 aménagé radialement dans l'arbre d'entrainement 20. La bille 28 est mobile entre une position de maintien dans laquelle le premier ou le deuxième logement 41, 42 est maintenu en position sur l'arbre d'entrainement 20 et une position de libération dans laquelle le premier ou le deuxième logement 41, 42 peut être désaccouplé de l'arbre d'entrainement 20. La bille 28 est soumise à une force de rappel de la position de libération vers la position de maintien sous l'action d'un ressort 30 agencé dans le trou borgne 29. La bille 28 est empêchée de sortir du trou borgne 29 par un rétreint de matière. La bille 28 coopère avec une cavité semi circulaire 39 de l'outil 40.

Conformément à la figure 6, l'arbre d'entrainement 20 comporte une extrémité libre 31 munie d'un organe de guidage et d'appui formé par un pion 32 cylindrique. Le pion 32 cylindrique comprend une face inférieure 33 reposant sur le fond 51 du récipient de cuisson. L'extrémité libre 31 de l'arbre d'entrainement 20 comporte un logement cylindrique 34 de réception du pion 32. Le pion 32 et le logement cylindrique 34 s'étendent verticalement le long de l'axe vertical 21. Le pion 32 cylindrique est mobile en rotation dans le logement cylindrique 34 pour former une liaison de type pivot glissant. Le pion 32 comporte une face supérieure 36 bombée qui coopère avec une paroi de fond 35 bombée du logement cylindrique 34 pour former un appui plan. Le pion 32 est donc lié à l'extrémité libre 31 de l'arbre d'entrainement 20 par une liaison du type pivot glissant avec appui plan.

L'extrémité libre 31 de l'arbre d'entrainement 20 comporte un ergot 37 s'étendant radialement vers l'intérieur du logement cylindrique 34. L'ergot 37 coopère avec une rainure périphérique 38 du pion 32. L'ergot 37 et la rainure périphérique 38 forment des moyens de maintien du pion 32 dans le logement cylindrique 34 de l'arbre d'entrainement 20 tout en autorisant la rotation du pion 32 dans le logement cylindrique 34.

L'arbre d'entrainement 20 comporte une troisième portion 25 solidaire du mécanisme de transmission. La troisième portion 25 comporte une cavité cylindrique 60 dans laquelle est agencée de manière coulissante la deuxième portion 24. La deuxième portion 24 comporte une ouverture transversale 61 de forme oblongue qui coopère avec un axe 62 agencé radialement sur la troisième portion 25. Un ressort de rappel 63 est agencé entre une paroi de fond 64 de la cavité cylindrique 60 et une face supérieure 65 de la deuxième portion 24. Le ressort de rappel 63 tend à rappeler les première et deuxième portions 23, 24 de l'arbre d'entrainement 20 ainsi que l'outil 40 dans une position basse de sortie. Ainsi, l'outil 40 rotatif est monté coulissant le long de l'axe vertical 21.

En fonctionnement, l'utilisateur qui veut adapter le dispositif 1 de traitement des aliments précédemment agencé sur une casserole 50a de diamètre 20 centimètres (Fig.1) sur une casserole 50b de plus grand diamètre, par exemple de diamètre 22 centimètres (Fig.2), va désaccoupler le dispositif 1 de la paroi 52 en déplaçant le mors mobile 4 dans la position ouverte de désaccouplement. Il va ensuite retirer le dispositif 1 et déplacer l'outil 40 transversalement à l'axe vertical 21 de la première position de travail à la deuxième position de travail. Pour ce faire, il va appliquer un effort sur l'outil 40 du bas vers le haut pour faire passer la bille 28 de la position de maintien à la position de libération et pour faire coulisser la deuxième portion 24 de l'arbre d'entrainement 20 dans le premier logement 41 en lieu et place de la première portion 23. L'utilisateur peut ensuite dégager radialement la deuxième portion 24 du premier logement 41 par l'ouverture latérale 45. Selon un processus inverse, l'utilisateur va assembler l'outil 40 dans la deuxième position de travail en positionnant la première portion 23 dans le deuxième logement 42.

L'utilisateur, en tenant le dispositif 1 par le châssis 2 en forme de poignée, va appliquer un effort sur le boitier 5 selon la direction radiale 22 pour faire passer les extrémités libres 13a, 13b des tenons 9a, 9b au-dessus des protubérances 15b. Pour ce faire, les extrémités libres 7a, 7b de la lame 6 s'écartent et ainsi, les extrémités libres 13a, 13b des tenons 9a, 9b sortent de leur logement 16a respectif, les tenons 9a, 9b coulissent dans les rainures 12a, 12b et les extrémités libres 13a, 13b des tenons 9a, 9b se repositionnent dans leur logement 16b adjacent respectif. Les logements 16a, 16b sont agencés le long des rainures 12a, 12b au pas de un centimètre. Ainsi, lorsque l'utilisateur accouple le dispositif 1 sur une casserole de diamètre supérieur de deux centimètres, l'axe vertical 21 de l'outil d'entrainement 20 est aligné avec l'axe vertical de la casserole. De plus, les premier et deuxième logements 16a, 16b sont espacés de un centimètre. Ainsi, l'extrémité libre 44 de l'extension radiale 43 de l'outil 40 est positionnée à proximité de la paroi 52.

Pour accoupler le dispositif 1 sur la casserole 50b, l'utilisateur glisse le mors fixe 3 et le mors mobile 4 de part et d'autre de la paroi 52. La face inférieure 33 du pion 32 agencé à l'extrémité libre 31 vient en contact avec le fond 51 et la deuxième portion 24 de l'arbre d'entrainement 20 coulisse dans la troisième portion 25 pour permettre l'adaptation du dispositif 1 à la hauteur de la paroi 52. L'utilisateur peut alors déplacer le mors mobile 4 dans la position fermée d'accouplement. Enfin, l'utilisateur peut mettre en marche le moteur 17 pour entrainer l'arbre d'entrainement 20 et l'outil 40 en rotation. La face inférieure 33 du pion 32 repose de manière immobile sur le fond 51 pour garantir une bonne position de travail de l'outil 40 et un bon guidage en rotation de l'arbre d'entrainement 20.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, l'organe de guidage et d'appui est lié à l'extrémité libre de l'arbre d'entrainement par une liaison du type rotule sphérique.

Dans une autre variante de réalisation non représentée sur les figures la face inférieure de l'organe de guidage et d'appui présente une forme annulaire.

## Revendications

1. Dispositif (1) de traitement d'aliments disposés dans un récipient (50a, 50b) de cuisson ledit dispositif (1) comportant des moyens de fixation (3, 4) sur ledit récipient (50a, 50b) de cuisson qui permettent un accouplement/désaccouplement dudit dispositif (1) sur le récipient de cuisson (50a, 50b) un arbre d'entrainement (20) d'un outil (40) rotatif destiné à coopérer avec lesdits aliments, ledit dispositif (1) comportant un organe de guidage et d'appui (32) d'une extrémité libre (31) de l'arbre d'entrainement (20), ledit organe de guidage et d'appui (32) comportant une face inférieure (33) d'appui destinée à reposer sur un fond (51) du récipient (50a, 50b) de cuisson et ledit organe de guidage et d'appui (32) étant lié à l'extrémité libre (31) de l'arbre d'entrainement (20) par une liaison du type rotule sphérique ou pivot, l'organe de guidage et d'appui étant formé par un pion (32) cylindrique dont la face inférieure (33) destinée à reposer sur le fond (52) du récipient (50a, 50b) est circulaire, ledit pion (32) étant mobile en rotation dans un logement cylindrique (34) agencé à l'extrémité libre (31) de l'arbre d'entrainement (20), **caractérisé en ce que** le pion (32) cylindrique comporte une face supérieure (36) bombée qui coopère avec une paroi de fond (35) du logement cylindrique (34).

2. Dispositif (1) de traitement d'aliments selon la revendication 1, **caractérisé en ce qu'**il comporte des moyens de maintien (37, 38) du pion (32) dans le logement cylindrique (34) de l'arbre d'entrainement (20).

3. Dispositif (1) de traitement d'aliments selon l'une quelconque des revendications précédentes, **caractérisé en ce que** l'organe de guidage et d'appui (32) est réalisé en un matériau présentant un coefficient de frottement faible, notamment en polytétrafluoroéthylène.

4. Dispositif (1) de traitement d'aliments selon l'une quelconque des revendications précédentes, **caractérisé en ce que** la face inférieure (33) de l'organe de guidage et d'appui (32) est recouverte d'un matériau présentant un coefficient de frottement supérieur au coefficient de frottement du matériau constituant l'organe de guidage et d'appui (32).

5. Dispositif (1) de traitement d'aliments selon l'une quelconque des revendications précédentes, **caractérisé en ce que** la face inférieure (33) de l'organe de guidage et d'appui (32) présente une surface de contact avec le fond (52) du récipient (50a, 50b) supérieure à 75 mm².

6. Dispositif (1) de traitement d'aliments selon l'une quelconque des revendications précédentes, **caractérisé en ce que** l'outil (40) rotatif est monté coulissant le long d'un axe vertical (21) d'extension de l'arbre d'entrainement (20).

7. Dispositif (1) de traitement d'aliments selon l'une quelconque des revendications précédentes, **caractérisé en ce qu'**il comporte des moyens de fixation (23, 41, 42, 28) de l'outil (40) rotatif sur l'arbre d'entrainement (20) permettant un montage/démontage sans outil.

8. Dispositif (1) de traitement d'aliments selon l'une quelconque des revendications précédentes, **caractérisé en ce qu'**il comporte un mécanisme de coulissement (9a, 9b, 12a, 12b) de l'arbre d'entrainement (20) par rapport aux moyens de fixation (3, 4) selon une direction radiale (22) du récipient.

9. Dispositif (1) de traitement d'aliments selon l'une quelconque des revendications précédentes, **caractérisé en ce que** le dispositif de traitement comporte un moteur (17) mettant en rotation l'arbre d'entrainement (20) et une source d'énergie (19).
